# EUROPEAN PATENT SPECIFICATION

(11) **EP 0 493 561 B1**
(45) Date of publication and mention of the grant of the patent: **22.09.1999**
(21) Application number: 91913010.4
(22) Date of filing: 18.07.1991
(51) Int. Cl.: A01N 25/34, A01N 25/04, B65D 65/38

(54) **GEL FORMULATIONS**
GEL-FORMULIERUNGEN
FORMULATIONS DE GEL

(30) Priority: 18.07.1990 US 554615; 04.04.1991 US 680318
(43) Date of publication of application: 08.07.1992
(73) Proprietor: RHONE-POULENC AGROCHIMIE, 69009 Lyon (FR)
(72) Inventor: HODAKOWSKI, Leonard, E., Raleigh, NC 27615 (US); COUCH, Richy, W., Durham, NC 27713 (US); GOUGE, Samuel, T., Raleigh, NC 27614 (US); LIGON, Robert, C., Raleigh, NC 27612 (US)
(74) Representative: Bentham, Stephen
(86) International application number: EP9101351
(87) International publication number: WO9201377

(56) References cited:
- EP-A- 347 220
- EP-A- 0 251 464
- EP-A- 0 251 464
- EP-A- 0 347 220
- EP-A- 0 347 220
- EP-A- 0 449 773
- EP-A- 0 449 773
- WO-A-91/05714
- WO-A-91/05714
- BE-A- 889 274
- World Patents Index Latest, Section C, Week 8828, 7 September 1988, Derwent Publications Ltd, (London, GB) class C, AN 88-194649/28, & JP, A, 63132802 (SHINTO PAINT K.K.) 4 June 1988, see abstract
- Chemical Abstracts, volume 85, no. 20, 15 November 1976, (Columbus, Ohio, US), R. E. Baier et al.: "Universal gelling agent for the control of hazardous liquid spills", see page 366, abstract 148391d, & J. Hazard. Mater. 1975, 1(1), 21-33
- World Patents Index Latest, Section C, Week 8739, 25 November 1987, Derwent Publications Ltd, (London, GB) Class C, AN 87-274684/39, & JP,A,62 192 301 (KAGAKU E C KOGYO K.K.) 22 August 1987
- PATENT ABSTRACTS OF JAPAN vol. 5, no. 132 (C-68)[804] 22 August 1981 & JP,A,56 068 601 (WAKO JUNYAKU KOGYO K.K.) 9 June 1981
- Römpps Chemie-Lexikon, 1988, page 4250-1, Franckh'sche Verlagsbuchhandlung Stuttgart

## Description

The invention relates to new containerisation systems containing water dispersible organic gels. The containerisation systems are suitable for containing hazardous products rendering them safe to handle and not hazardous to the environment.

At present, most hazardous liquids are stored in metal drums or, where smaller quantities are required, in plastic containers.

Hazardous compounds, especially agrochemical compounds are formulated in various compositions. Liquid compositions are most convenient for farmers because of the relative ease with which they can he handled. There are, nevertheless, difficulties in handling such liquid compositions. There is a danger of spillage or leakage if there are holes in previously used containers or if they are dropped. Although secure containers resistant to shock can be used, in the event of an accident, for example during transportation, the risk remains of spillage or leakage with rapid loss of liquid, for example, leakage onto the ground.

It has been difficult to provide a formulation and a containerization system (i.e., container) which safeguards those handling it, including farmers and transporters, and protects the environment.

It is known to provide agrochemicals in soluble bags or sachets, (see EP-A-0,347,220) that does not completely avoid the possibility of _{,}but the bag cracking and breaking and the liquid creating a contamination problem. More specifically, when water soluble bags are used, the solvent from the solvent-based agrochemicals tends to more or less extract the adjuvant or additives from the film and render the wall (film) of the bag more brittle (especially it low temperatures and more specifically at temperatures below 0°C). This reduces the life time of the bag.

The present invention seeks to provide containerization systems to contain agrochemicals, which systems are safe for everybody, especially farmers and other persons who handle the agrochemicals.

The present invention also seeks to provide containerization systems which are easy for the farmer to manipulate.

The present invention also seeks to provide containerization systems for agrochemicals which are readily, rapidly and easily soluble and/or dispersible in water, preferably in less than ten minutes, more preferably in less than five minutes under normal agitation. This is a problem which is especially difficult to overcome because an increase of viscosity is often connected with increased difficulty in forming the water dispersions.

The invention also seeks to provide a containerisation system for agrochemicals which are condensed as much as possible, thus requiring the least amount of space.

The present invention also seeks to provide containerization systems for hazardous compounds (e.g., agrochemicals) which diminish the risks of pollution.

The present invention also seeks to provide containerization systems for smelly or stinking compounds so as to reduce or cancel the odours.

The invention also seeks to avoid breakage of containers which contain agrochemical formulations. When the containers are rigid, there is substantial possibility of simple breakage. With a liquid in a bag this possibility is somewhat reduced, but the liquid still transmits the shocks and there is a problem of a hydraulic hammer effect. The invention also seeks to avoid, or at least to partially reduce, this hydraulic hammer effect.

The invention also seeks to provide containerisation systems for hazardous compounds which dissipate, as much as possible, the energy of a shock to a container from outside providing shock absorbing formulas and containerisation systems for agrochemicals, e.g. pesticides, plant protection, plant growth regulators.

The invention also seeks to provide a new containerisation system for agrochemicals which reduces the risks of clogging the spray nozzles or the filters of spray tanks.

Compositions containing a polyacrylic acid gelling or thickening agent have been disclosed in Chemical Abstracts, (1976), Vol. 85, 148391d, in EP-A-0,251,464 and in JP-A-63/132802.

The present invention provides a containerisation system comprising a water-dispersible organic gel in a water soluble or water dispersible bag, wherein the gel comprises by weight: (a) 10 to 90% of hazardous product, (b) 1 to 50% of a water-soluble or water-dispersible surfactant, (c) 0.1 to 50% of an acrylic acid polymer or copolymer, optionally in the form of a salt and optionally crosslinked and (d) from 0.5 to 2.5% water.

The water-dispersible organic gel may be a continuous system. The water-dispersible organic gels comprise a hazardous product (e.g., an agrochemical, preferably a pesticide, a plant protection agent, or a plant growth regulator) as the active ingredient; a water-soluble or water dispersible surfactant; a polyacrylic acid polymer, optionally in the form of a salt or a copolymer and optionally cross-linked (eg. partially cross-linked) and from, 0.5 to 2.5% of water.

As used herein, "surfactant" means an organic material which is able to substantially reduce surface tension of water.

Surfactants useful herein may be non-ionic, anionic, cationic or zwitterionic. One surfactant, or a mixture of surfactants may be used. Amphoteric surfactants may be used. Preferably, the surfactant is able to form, at above 70°C or preferably at above 50°C, a liquid mixture, preferably a liquid phase with the hazardous product and organic solvent if present. This liquid mixture may be a single continuous phase or in the form of an emulsion. Preferably, at least 10% of the surfactant contains hydroxy and/or alkoxy groups, such as polyethoxylated or polypropoxylated derivatives, especially the derivatives of fatty amines or fatty acids or fatty alcohols or aryl phenols.

The polyacrylic acid polymers which may be used herein are preferably compounds which are water-soluble or water-dispersible and have molecular weights from 5000 to 5,000,000, preferably from 100,000 to 3,000,000. Acrylic acid may be copolymerized with many other comonomers, for example with methacrylic acid, alkyl acrylates or methacrylates, N,N-dialkylacrylamides. Copolymerization with monomers such as ethylene, vinyl acetate, styrene and vinyl chloride is also possible. The amount of comonomer is generally less than 50%, preferably less than 30%. Some cross-linking may be present, especially to modify the molecular weight.

It was known to use gel formulations for pharmaceuticals or cosmetics, but there is practically no risk of pollution or environmental contamination when handling such products, in contrast to pesticides and agrochemicals. Furthermore, the gels used for pharmaceutical or cosmetic purposes are generally water-based, so that it was unobvious to obtain gels which are convenient for inclusion in water-soluble sachets or bags and useful for shock absorption purposes in such bags.

Furthermore, even when non aqueous liquids are contained in water-soluble bags, the liquids may have a low (i.e., not zero) water content which may cause the bags to break upon freezing. The present invention provides formulations for agrochemicals which quickly dissolve when put into water and which are not damaged by normal freezing.

The hereinbefore defined gel may optionally contain an organic solvent or a mixture of organic solvents in which the active ingredient is soluble (eg completely soluble) at room temperature; a dispersant; a secondary thickener such as fumed silica, hydroxyethyl cellulose, carboxymethyl cellulose, organically modified attapulgite or montmorillonite clay, hardened castor oil, cetyl and stearyl alcohols or esters, polyethylene glycols, glyceryl hydroxystearate, polyvinylalcohols (of low molecular weight), dioctyl sodium sulfosuccinate and sodium benzoate, alkyl benzene sulfonates, xanthum gum, polyvinylpyrrolidone, polyvinyl acetate, and the like; and other additives such as antifoam agents, stabilizers, buffers, and antifreeze agents.

Among the gels used in the present invention, as hereinbefore defined, some particular gels are preferred, especially those comprising 25 to 80%, of the active ingredient; 2 to 20%, of the surfactant; 0.5 to 5%, of the polyacrylic acid; 0 to 80% of a solvent, more preferably 3 to 50%; 0 to 20% of other additives, preferably 0.1 to 10%; and optionally 1 to 25%, preferably 2 to 8%, of a dispersant.

According to a particular feature of the invention, the components of the compositions are chosen in such a way that one or more of the following feature are present:
(i) the resulting gels form a continuous system;
(ii) the resulting gels have a viscosity of 500 to 50,000 centipoises, more preferably of 1000 to 12,000 centipoises;
(iii) the gel has a phase difference phi between the controlled shear stress and the resulting shear strain such that tg(phi) is less than or equal to 1.5, preferably less than or equal to 1.2;
(iv) the gels preferably have a specific gravity greater than 1, preferably greater than 1.05, more preferably greater than 1.1; and/or
(v) the gels have a spontaneity (as hereafter defined) of less than 75, preferably less than 25.

The above viscosities are Brookfield viscosities measured with a viscometer in the form of a flat palate rotating at 20 rounds per minute.

Tg(phi) is the tangent of the angle phi (or phase difference). The measurement of phi is made by means of a rheometer having a flat fixed plate and a rotating cone above this plate such that the angle between them is less than 10°, preferably 4°. The cone is caused to rotate by means of a controlled speed motor. The rotation is a sinusoidal one, i.e., the torque and the angular displacement change as a sine function with time. This angular displacement corresponds to the hereabove mentioned shear strain. The torque of the controlled speed motor (which causes the angular displacement) corresponds to the hereabove mentioned controlled shear stress.

As used herein, "continuous system" means a material which is visually homogenous, i.e., which has the visual appearance of having only one physical phase. This does not exclude the possibility of having small solid particles dispersed therein, provided these particles are small enough not to constitute a visible separate physical phase.

It is known that a gel is generally a colloid in which the dispersed phase has combined with the continuous phase to produce a viscous, jelly-like product; it is also a dispersed system consisting typically of a high molecular weight compound or aggregate of small particles in very close association with a liquid.

As used herein, "hazardous product" means a product which may damage the environment or injure the person handling it. According to one main and preferred feature of the invention, the hazardous product is an active ingredient which is an agrochemical, more precisely a pesticide or a plant protection agent (including plant growth regulators or plant nutrients). The invention is not limited to specific agrochemicals., A list of the many agrochemicals which can be used in the invention include the following:
fungicides such as Triadimefon, Tebuconozole, Prochloraz, Triforine, Tridemorph, Propiconazole, Pirimacarb, Iprodione, Metalaxyl, Bitertanol, Iprobenfos, Flusilazol, Fosetyl, Propyzamide, Chlorothalonil, Dichlone, Mancozeb, Anthraquinone, Maneb, Vinclozolin, Fenarimol, Bendiocarb, Captafol, Benalaxyl, Thiram, and the like;
herbicides (or defoliants) such as quizalofop and its derivatives, Acetochlor, Metolachlor, Imazapur and Imazapyr, Glyphosate and Gluphosinate, Butachlor, Acifluorfen, Oxyfluorfen, Butralin, Flauzifop-butyl, Bifenox, Bromoxynil, Ioxynil, Diflufencian, Phenmedipham, Desmedipham, Oxadiazon, Mecopropo, MCPA, MCPB, MCPP, Linuron, Isoproturon, Flamprop and its derivatives, Ethofumesate, Diallate, Carbetamide, Alachlor, Metsulfuron, Chlorsulfuron, Chlorpyralid, 2,4-d-Tribufos, Triclopyr, Diclofop-methyl, Sethoxydim, Pendimethalin, Trifluralin, Ametryn, Chloramben, Amitrole, Asulam, Dicamba, Bentazone, Atrazine, Cyanazine, Thiobencarb, Prometryn, 2-(2-chlorobenzyl)-4,4-dimethyl-1,2-oxazolidin-3-one, Fluometuron, Napropamide, Paraquat, Bentazole, Molinate, Propachlor, Imazaquin, Metribuzin, Tebuthiuron, Oryzalin, and the like;
insecticides or nematicides such as Ebufos, Carbosulfan, Amitraz, Vamidothion, Ethion, Triazophos, Propoxur, Phosalone, Permethrin, Cypermethrin, Parathion, Methylparathion, Diazinon, Methomyl, Malathion, Lindane, Fenvalerate, Ethoprophos, Endrin, Endosulfan, Dimethoate, Dieldrin, Dicrotophos, Dichlorprop, Dichlorvos, Azinphos and its derivatives, Aldrin, cyfluthrin, Deltamethrin, Disulfoton, Chlordimeform, Chlorpyrifos, Carbaryl, Dicofol, Thiodicarb, Propargite, Demeton, Phosalone, and the like;
plant growth regulators such as gibberellic acid, ethrel or ethephone, cycocel, chlormequat, Ethephone, Mepiquat, and the like.

Among the many agrochemicals, the following are of particular interest: the organophosphorous insecticides and hydroxybenzonitrile herbicides such as bromoxynil or ioxynil either in the form of a salt or an ester.

The chemical nature of the enveloping film constituting the bags, which may contain the gel formulation of the invention, can vary quite widely. Suitable material are water-soluble or water-dispersible materials which are insoluble in the organic solvents used to dissolve or disperse the agrochemical active ingredient. Specific suitable materials include polyethylene oxide, such is polyethylene glycol; starch and modified starch; alkyl and hydroxyalkylcellulose, such is hydroxymethylcellulose, hydroxyethylcellulose, hydroxypropylcellulose; carboxymethylcellulose; polyvinyl ethers such as polymethyvinyl ether or poly(2-methoxy or ethoxy ethylene); poly(2,4-dimethyl-6-triazinylethylene; poly (3-morpholinylethylene); poly (N-1,2,4-triazolylethylene); poly(vinylsulfonic acid); polyanhydrides; low molecular weight urea-formaldehyde resins; low molecular weight melamine-formaldehyde resins; poly(2-hydroxyethyl methacrylate); polyacrylic acid and its homologs. Preferably, the enveloping film comprises or is mode from polyvinylalcohol (PVA). The PVA is generally partially or fully alcoholyzed or hydrolyzed, e.g., 40-100%, preferably 80-99%, alcoholyzed or hydrolyzed polyvinyl acetate film. Preferred materials for the bags are polyethylene oxide, methyl cellulose, or polyvinyl alcohol. When polyvinylalcohol is used, it is advantageously a 40-100%, preferably 80-99%, alcoholyzed or hydrolyzed polyvinyl acetate film.

Preferred materials for the bags are polyethylene oxide, methyl cellulose, polyvinyl alcohol. When polyvinyl alcohol is used, it is advantageously a 40-100%, preferably 80-99% alcoholyzed or hydrolyzed polyvinyl acetate film.

Surfactants which are particularly suitable for the invention are defined by the following test. According to this test, the liquid active ingredient, in the organic solvent if present in the gel, (50g in total) and surface-active adjuvant (i.e., surfactant) (5g) are added to an amount of water, at 50°C, which is sufficient to bring the volume of the mixture to 100 ml. The mixture is agitated sufficiently to form a homogenous emulsion. The emulsion is allowed to stand for 30 minutes it 50°C in a graduated cylinder. The amount of oily layer which may have separated out (and thus formed a distinct liquid phase) must be less than 20 ml.

In order to assess whether a surface-active adjuvant possesses dispersing properties and may be a "dispersant" according to the invention, the following test is carried out. An aqueous suspension (100 ml) containing kaolin or atrazine (50 g), in the form of solid particles having a particle size between 1 and 10 microns, and the surface-active adjuvant (5g) is allowed to stand at 20°C for 30 minutes in a graduated cylinder. Kaolin is used when the dispersing agent is able to disperse a hydrophilic solid. Atrazine is used when the dispersing agent is able to disperse a hydrophobic solid. After standing, 9/10ths (nine-tenths) of the volume of the suspension, situated in the upper part of the suspension, is removed, without agitation, and the solids content (residue after evaporation of the water) of the remaining tenth is measured. This solids content must not exceed 12% by weight of the solids content of 100 ml of the suspension on which the test is carried out.

The spontaneity is assessed by the following method. A mixture of 1 ml of gel with 99 ml of water are put into a 150 ml glass tube which is stoppered and inverted through 180°C (i.e., turned upside down). The number of times required to completely disperse the gel is called the spontaneity.

A thickener is a compound which increases the viscosity of a gel or a liquid.

The surfactants which may be used in the invention may be selected from among the following: salts of lignosulfonic acids; salts of phenyl sulphonic or napthaleno sulphonic acids; poly condensates of ethylene oxide with fatty alcohols, fatty acids, fatty esters, or fatty amines, or substituted phenols (particularly alkylphenols or arylphenols); salts of sulfosuccinic acid esters; taurine derivatives (particularly alkyltaurates); phosphoric esters of alcohols or of polycondensates of ethylene oxide with phenols; esters of fatty acids with polyols; sulfate, sulphonate and phosphate functional derivatives of the above compounds; and the like.

The dispersants which may be used in the invention may be selected from among the following: condensed naphthalene sulfonic acid; polyacrylic acid; sodium sulfosuccinate; calcium lignosulfonate; glyceryl stearate; ethylene glycols; and the like.

The gels used in the inventions are generally very easy to make, simply by mixing the components, and most of the time no grinding or milling is necessary. Furthermore, they maintain their rheological properties for a very long time.

In order to make a bag, the film is shaped (and possibly partially sealed) and then filled with the gel. Generally the gels are flowable, even if it is at a slow rate due to their high viscosity. A container which is used to contain the gels cannot he easily emptied due to this high gel viscosity (which is the reason why the gels were not used previously in the agriculture). When filled, the bag is finally sealed, generally heat sealed.

Further information may be found in the following copending applications, the disclosures of which are incorporated herein by reference: application of Leonard E. Hodakowski, ChiYu R. Chen, Samuel T. Gouge_{*} Paul J. Weber for "Gel Formulations for Use in Toxic or Hazardous Product Containerization Systems" filed April 4, 1991; application of David Edwards and William McCarthy for "Laminated Bags for Containerization of Toxic or Hazardous Materials" filed April 4, 1991; application of Samuel T. Gouge, Leonard E. Hodakowski, Chi-Yu R. Chen, and Paul J. Weber for "Gel Formulations for Hazardous Products" filed April 4, 1991; application of Leonard E. Hodakowski, Chi-Yu R. Chen, Samuel T. Gouge, and Paul J. Weber for "Water Dispersible Gel Formulations" filed April 4, 1991; and application of Samuel T. Gouge, David P. Downing, Spencer B. Cohen, Allan J. Luke, Robert D. McLaughlin and James E. Shue for "Bag In A Bag For Containerization of Toxic or Hazardous Material" filed April 4, 1991.

The following examples are given for illustrative purposes and should not be understood as restricting the invention. In those examples, the tg(phi) is less than 1.5 and the gels are made by mixing the agrochemical, the surfactant and the solvent, adding the polyacrylic acid polymer while stirring at room temperature, and finally adding the water and continuing the stirring for about a half an hour. The mixture is allowed to set overnight.

### Example 1

The components are 72.6% ethoprop, 20% xylene, 5% polyethoxylated nonyl phenol in form of the phosphate ester, 1.4% polyacrylic acid polymer (1,250,000 molecular weight), and 1 % water. The gel which is obtained has a continuous phase, is clear and transparent, and has a Brookfield viscosity of 11000 centipoises. It thickens upon agitation. The spontaneity is 20 and the density is 1.03.

### Example 2

The components are 27.9 % bromoxynil octanoate, 34.1 % bromoxynil heptanoate, 20 % xylene, 14.8 % polyethoxylated nonyl phenol in the form of the phosphate ester, 1.1 % polyacrylic acid polymer (1,250,000 molecular weight), 1 % of a mixture of dioctylsodium sulfosuccinate and sodium benzoate, and 1.1% water. The gel which is obtained has a continuous phase, is translucent, and has a Brookfield viscosity of 40,000 centipoises. It maintains its rheological properties between +50°C and -20°C. The spontaneity is 40.

### Example 3

The components are 45% ethoprop, 23 % disyston, 20.5% xylene, 5% polyethoxylated nonyl phenol in the form of the phosphate ester, 2% polyacrylic acid polymer (1,250,000 molecular weight), 2% of a mixture of dioctylsodium sulfosuccinate and sodium benzoate, and 1.5% water. The gel which is obtained has a continuous phase and is translucent. The spontaneity is 40.

### Example 4

The components are 73.5% ethoprop, 19% xylene, 4.5% polyethoxylated nonyl phenol in the form of the phosphate ester, 2% polyacrylic acid copolymer (1,250,000 molecular weights), and 1% water. The gel which is obtained has a continuous phase and is clear and transparent. The spontaneity is 30. It is stable for 5 months at -20°C.

### Example 5

The components are 27.9% of bromoxynil octanoate, 34.1 % bromoxynil heptanoate, 22.6% xylene, 13 % polyethoxylated nonyl phenol in the form of the phosphate ester, 0.9% polyacrylic acid polymer (1,250,000 molecular weight), 0.5% of alkyl benzene sulfonate, and 1% water. The gel which is obtained has a continuous phase, is translucent, and has a Brookfield viscosity of 5000 centipoises. It maintains its rheological properties between +50°C and -20°C. The spontaneity is 20. It is stable for 3 months at -20°C.

### Example 6

The components are 31.5% bromoxynil octanoate, 31.5% bromoxynil heptanoate, 21.2 % xylene, 13% polyethoxylated nonyl phenol in the form of the phosphate ester, 0.9% polyacrylic acid polymer (1,250,000 molecular weight), 0.9 % of a mixture of dioctylsodium sulfosuccinite and sodium benzoate, and 1 % water. The gel which is obtained has a continuous phase, is translucent, has a Brookfield viscosity of 3000 centipoises

### Example 7

The components are 33% of bromoxynil octanoate, 33% bromoxynil heptanoate, 21.6% xylene, 11 % of the sodium salt of polyethoxylated nonyl phenol in the fore of the phosphate ester (this salt contains 10 % water and thus it is added as the last component during the mixing), and 1.4% polyacrylic acid polymer (1,250,000 molecular weight). The gel which is obtained has a continuous phase and is translucent.

### Example 8

The gels according to the examples 1 to 7 are used in the following way. A total of 1100 g of the gel is put in a 1 liter big made of a film of PVA (88% hydrolyzed polyvinyl acetate which is cold water-soluble and has a thickness of 55 microns).

The bag, which is almost full (about 95% v/v), is heat sealed. The big is then dropped 10 times upon the ground from a height of 1.2 m. No breaking or leakage is observed.

The bag is put in a tank containing water under gentle agitation (that is to say such as that obtained with pump recycling). It is well dispersed within a short time. There is no clogging in the filter which is a 100 mesh screen.

## Claims

1. A containerisation system comprising a water-dispersible organic gel in a water soluble or water dispersible bag, wherein the gel comprises by weight: (a) 10 to 90% of hazardous product, (b) 1 to 50% of a water-soluble or water-dispersible surfactant, (c) 0.1 to 50% of an acrylic acid polymer or copolymer, optionally in the form of a salt and optionally crosslinked and (d) from 0.5 to 2.5% water.

2. A containerisation system according to claim 1 wherein the hazardous product is an agrochemical.

3. A containerisation system according to claim 1 or 2 wherein the hazardous product is a plant protection agent, a plant growth regulator, a pesticide or a plant nutrient.

4. A containerisation system according to any one of the preceding claims wherein the gel comprises by weight:
25 to 80% of hazardous product,
2 to 20% of surfactant, and
0.5 to 5% of acrylic acid polymer or copolymer.

5. A containerisation system according to any one of the preceding claims wherein the gel further comprises one or more of the following:
an organic solvent or a mixture of organic solvents in which the hazardous product is soluble at room temperature,
a thickener
a dispersant and/or
another additive which is an antifoam agent, a stabiliser, a buffer, or an antifreeze agent.

6. A containerisation system according to claim 5, wherein the gel comprises by weight up to 80% of solvent and up to 20% of a thickener and other additives as defined in claim 5.

7. A containerisation system according to claim 6, wherein the gel comprises, by weight 3 to 50% of solvent and 0.1 to 10% of thickener and other additives.

8. A containerisation system according to claims 5, 6 or 7 wherein the gel further comprises 1 to 25% by weight of a dispersant.

9. A containerisation system according to claim 8 wherein the gel comprises 2 to 8% by weight of a dispersant.

10. A containerisation system according to any one of the preceding claims wherein the acrylic acid polymer or copolymer is water-soluble or water-dispersible and has a molecular weight from 5,000 to 5,000,000.

11. A containerisation system according to claim 10, wherein the acrylic acid polymer or copolymer has a molecular weight of from 100,000 to 3,000,000.

12. A containerisation system according to any one of the preceding claims wherein the gel has a viscosity of 500 to 50,000 centipoises.

13. A containerisation system according to claim 12, wherein the viscosity of the gel is from 1,000 to 12,000 centipoises.

14. A containerisation system according to any one of the preceding claims wherein the gel has a phase different (phi) between the controlled shear stress and the resulting shear strain such that tg(phi) is less than or equal to 1.5.

15. A containerisation system according to claim 14 wherein the phase difference (phi) between the controlled shear stress and the resulting shear strain is such that tg(phi) is less than or equal to 1.2.

16. A containerisation system according to any one of the preceding claims wherein the spontaneity of the gel is less than 75.

17. A containerisation system according to claim 16, wherein the spontaneity of the gel is less than 25.

18. A containerisation system according to any one of the preceding claims wherein the bag comprises a polyethylene oxide; an unmodified or modified starch; an alkyl-, hydroxyalkyl- or carboxyalkyl- cellulose; a polyvinyl ether; poly(2,4-dimethyl-6-triazolylethylene); poly(vinylsulfonic acid); a polyanhydride; a low molecular weight urea-formaldehyde resin; a low molecular weight melamine-formaldehyde resin; a polyacrylate, a polymethacrylate or a polyacrylic acid or a homologue thereof.

19. A containerisation system according to claim 18, wherein the bag comprises a polyethylene oxide which is polyethylene glycol; a hydroxyalkylcellulose which is hydroxymethyl-, hydroxyethyl- or hydroxypropyl-cellulose; a carboxyalkyl-cellulose which is carboxymethyl-cellulose; a polyvinyl ether which is polymethylvinylether; or a polymethacrylate which is poly(2-hydroxyethyl methacrylate).

20. A containerisation system according to any one of the preceding claims wherein the bag comprises polyethylene oxide, methylcellulose, or polyvinyl alcohol.

21. A containerisation system according to claim 20, where the bag comprises polyvinyl alcohol which is 40 to 100% alcoholysed or hydrolyzed polyvinyl acetate.

22. A containerisation system according to claim 21, wherein the polyvinyl alcohol is 80 to 99% alcoholysed or hydrolyzed polyvinyl acetate.

## Patentansprüche

1. Containerisierungssystem, umfassend ein in Wasser dispergierbares organisches Gel in einem in Wasser löslichen oder in Wasser dispergierbaren Beutel, wobei das Gel, bezogen auf das Gewicht, umfaßt: (a) 10 bis 90 % gefährliches Produkt, (b) 1 bis 50 % eines in Wasser löslichen oder in Wasser dispergierbaren grenzflächenaktiven Mittels, (c) 0,1 bis 50 % eines Acrylsäure-Polymers oder -Copolymers, gegebenenfalls in Form eines Salzes und gegebenenfalls vernetzt, und (d) 0,5 bis 2,5 % Wasser.

2. Containerisierungssystem nach Anspruch 1, wobei das gefährliche Produkt eine landwirtschafliche Chemikalie ist.

3. Containerisierungssystem nach Anspruch 1 oder 2, wobei das gefährliche Produkt ein Pflanzenschutzmittel, ein Pflanzenwachstumsregulator, ein Pestizid oder ein Pflanzennährstoff ist.

4. Containerisierungssystem nach einem der vorangehenden Ansprüche, wobei das Gel, bezogen auf das Gewicht, umfaßt:
25 bis 80 % gefährliches Produkt,
2 bis 20 % grenzflächenaktives Mittel und
0,5 bis 5 % Acrylsäurepolymer oder -Copolymer.

5. Containerisierungssystem nach einem der vorangehenden Ansprüche, wobei das Gel ferner umfaßt eine oder mehrere der folgenden Komponenten:
ein organisches Lösungsmittel oder ein Gemisch von organischen Lösungsmitteln, in dem das gefährliche Produkt bei Raumtemperatur löslich ist,
ein Verdickungsmittel,
ein Dispergiermittel und/oder
ein anderes Additiv, das ein Antischaummittel, ein Stabilisator, ein Puffer oder ein Frostschutzmittel ist.

6. Containerisierungssystem nach Anspruch 5, wobei das Gel, bezogen auf das Gewicht, bis zu 80 % Lösungsmittel und bis zu 20 % eines Verdickungsmittels und andere Additive, wie in Anspruch 5 definiert, umfaßt.

7. Containerisierungssystem nach Anspruch 6, wobei das Gel, bezogen auf das Gewicht, 3 bis 50 % Lösungsmittel und 0,1 bis 10 % Verdickungsmittel und andere Additive umfaßt.

8. Containerisierungssystem nach einem der Ansprüche 5, 6 oder 7, wobei das Gel ferner 1 bis 25 Gew.-% eines Dispergiermittels umfaßt.

9. Containerisierungssystem nach Anspruch 8, wobei das Gel 2 bis 8 Gew.-% eines Dispergiermittels umfaßt.

10. Containerisierungssystem nach einem der vorangehenden Ansprüche, wobei das Acrylsäurepolymer oder -Copolymer in Wasser löslich oder in Wasser dispergierbar ist und ein Molekulargewicht von 5 000 bis 5 000 000 hat.

11. Containerisierungssystem nach Anspruch 10, wobei das Acrylsäurepolymer oder Copolymer ein Molekulargewicht von 100 000 bis 3 000 000 hat.

12. Containerisierungssystem nach einem der vorangehenden Anspruche, wobei das Gel eine Viskosität von 500 bis 50 000 cP hat.

13. Containerisierungssystem nach Anspruch 12, wobei das Gel eine Viskosität von 1000 bis 12 000 cP hat.

14. Containerisierungssystem nach einem der vorangehenden Ansprüche, wobei das Gel eine Phasendifferenz (ϕ) zwischen der kontrollierten Scherspannung und der daraus resultierenden Schiebung hat, so daß tg(ϕ) kleiner als oder gleich 1,5 ist.

15. Containerisierungssystem nach Anspruch 14, wobei die Phasendifferenz (ϕ) zwischen der kontrollierten Scherspannung und der daraus resultierenden Schiebung so ist, daß tg(ϕ) kleiner als oder gleich 1,2 ist.

16. Containerisierungssystem nach einem der vorangehenden Ansprüche, wobei das Gel einen Spontaneität von weniger als 75 % hat.

17. Containerisierungssystem nach Anspruch 16, wobei das Gel einen Spontaneität von weniger als 25 % hat.

18. Containerisierungssystem nach einem der vorangehenden Ansprüche, wobei der Beutel ein Polyethylenoxid, eine unmodifizierte oder modifizierte Stärke, eine Alkyl- oder Hydroxyalkyl- oder Carboxyalkylcellulose, einen Polyvinylether, Poly(2,4-dimethyl-6-triazolylethylen), Poly(vinylsulfonsäure), ein Polyanhydrid, ein Harnstoff/Formaldehyd-Harz mit niedrigem Molekulargewicht, ein Melamin/Formaldehyd-Harz mit niedrigem Molekulargewicht, ein Polyacrylat, ein Polymethacrylat oder Polyacrylsäure oder ein Homologes davon, umfaßt.

19. Containerisierungssystem nach Anspruch 18, wobei der Beutel ein Polyethylenoxid, das Polyethylenglykol ist, eine Hydroxyalkylcellulose, die Hydroxymethyl-, Hydroxyethyl- oder Hydroxypropylcellulose ist, eine Carboxyalkylcellulose, die Carboxymethylcellulose ist, einen Polyvinylether, der Polymethylvinylether ist, oder ein Polymethacrylat, das Poly(2-hydroxyethylmethacrylat) ist, umfaßt.

20. Containerisierungssystem nach einem der vorangehenden Ansprüche, wobei der Beutel Polyethylenoxid, Methylcellulose oder Polyvinylalkohol umfaßt.

21. Containerisierungssystem nach Anspruch 20, wobei der Beutel Polyvinylalkohol umfaßt, der 40 bis 100 % alkoholysiertes oder hydrolysiertes Polyvinylacetat ist.

22. Containerisierungssystem nach Anspruch 21, wobei der Polyvinylalkohol 80 bis 99 % alkoholysiertes oder hydrolysiertes Polyvinylacetat ist.

## Revendications

1. Système de conditionnement en récipient comprenant un gel organique dispersable dans l'eau dans un sac hydrosoluble ou dispersable dans l'eau, dans lequel le gel comprend, en poids : (a) 10 à 90 % d'un produit dangereux, (b) à 1 à 50 % d'un surfactant hydrosoluble ou dispersable dans l'eau, (c) 0,1 à 50 % d'un polymère ou copolymère d'acide acrylique, facultativement sous forme d'un sel et facultativement réticulé, et (d) 0,5 à 2,5 % d'eau.

2. Système de conditionnement en récipient suivant la revendication 1, dans lequel le produit dangereux est un agent agrochimique.

3. Système de conditionnement en récipient suivant la revendication 1 ou 2, dans lequel le produit dangereux est un agent de protection des végétaux, un régulateur de croissance de plantes, un pesticide ou une substance nutritive pour végétaux.

4. Système de conditionnement en récipient suivant l'une quelconque des revendications précédentes, dans lequel le gel comprend, en poids, :
25 à 80 % d'un produit dangereux,
2 à 20 % d'un surfactant, et
0,5 à 5 % d'un polymère ou copolymère d'acide acrylique.

5. Système de conditionnement en récipient suivant l'une quelconque des revendications précédentes, dans lequel le gel comprend en outre un ou plusieurs des constituants suivants :
un solvant organique ou mélange de solvants organiques dans lequel le produit dangereux est soluble à température ambiante,
un épaississant,
un dispersant et/ou
un autre additif qui est un agent anti-mousse, un stabilisant, un tampon ou un agent anti-gel.

6. Système de conditionnement en récipient suivant la revendication 5, dans lequel le gel comprend, en poids, jusqu'à 80 % de solvant et jusqu'à 20 % d'un épaississant et d'autres additifs répondant à la définition suivant la revendication 5.

7. Système de conditionnement en récipient suivant la revendication 6, dans lequel le gel comprend, en poids, 3 à 50 % en poids de solvant et 0,1 à 10 % d'épaississant et d'autres additifs.

8. Système de conditionnement en récipient suivant la revendication 5, 6 ou 7, dans lequel le gel comprend en outre 1 à 25 % en poids d'un dispersant.

9. Système de conditionnement en récipient suivant la revendication 8, dans lequel le gel comprend 2 à 8 % en poids d'un dispersant.

10. Système de conditionnement en récipient suivant l'une quelconque des revendications précédentes, dans lequel le polymère ou copolymère d'acide acrylique est hydrosoluble ou dispersable dans l'eau et a un poids moléculaire compris dans l'intervalle de 5000 à 5 000 000.

11. Système de conditionnement en récipient suivant la revendication 10, dans lequel le polymère ou copolymère d'acide acrylique a un poids moléculaire compris dans l'intervalle de 100 000 à 3 000 000.

12. Système de conditionnement en récipient suivant l'une quelconque des revendications précédentes, dans lequel le gel a une viscosité comprise dans l'intervalle de 500 à 50 000 centipoises.

13. Système de conditionnement en récipient suivant la revendication 12, dans lequel la viscosité du gel est comprise dans l'intervalle de 1000 à 12 000 centipoises.

14. Système de conditionnement en récipient suivant l'une quelconque des revendications précédentes, dans lequel le gel a une différence de phase (phi) entre la tension de cisaillement contrôlée et la déformation de cisaillement résultante telle que tg(phi) soit inférieure ou égale à 1,5.

15. Système de conditionnement en récipient suivant la revendication 14, dans lequel la différence de phase (phi) entre la tension de cisaillement contrôlée et la déformation de cisaillement résultante est telle que tg(phi) soit inférieure ou égale à 1,2.

16. Système de conditionnement en récipient suivant l'une quelconque des revendications précédentes, dans lequel la spontanéité du gel est inférieure à 75.

17. Système de conditionnement en récipient suivant la revendication 16, dans lequel la spontanéité du gel est inférieure à 25.

18. Système de conditionnement en récipient suivant l'une quelconque des revendications précédentes, dans lequel le sac comprend un polymère d'oxyde d'éthylène ; un amidon non modifié ou modifié ; une alkyl-, hydroxyalkyl- ou carboxyalkylcellulose ; un polymère d'éther vinylique ; un poly(2,4-diméthyl-6-triazolyléthylène) ; un poly(acide vinylsulfonique) ; un polyanhydride ; une résine urée-formaldéhyde de bas poids moléculaire ; une résine mélamine-formaldéhyde de bas poids moléculaire ; un polyacrylate, un polyméthacrylate ou un polymère d'acide acrylique ou un ses homologues.

19. Système de conditionnement en récipient suivant la revendication 18, dans lequel le sac comprend un polymère d'oxyde d'éthylène qui consiste en polyéthylène-glycol ; une hydroxyalkylcellulose qui consiste en hydroxy-méthyl-, hydroxyéthyl- ou hydroxypropylcellulose ; une carboxyalkylcellulose qui consiste en carbométhylcellulose; un polymère d'éther vinylique qui consiste en un polymère d'éther d'éthyle et de vinyle ; ou un polyméthacrylate qui consiste en poly(méthacrylate de 2-hydroxyéthyle).

20. Système de conditionnement en récipient suivant l'une quelconque des revendications précédentes, dans lequel le sac comprend un polymère d'oxyde d'éthylène, de la méthylcellulose ou un polymère d'alcool vinylique.

21. Système de conditionnement en récipient suivant la revendication 20, dans lequel le sac comprend un polymère d'alcool vinylique qui consiste en un polymère d'acétate de vinyle ayant subi à 40 à 100 % d'alcoolyse ou d'hydrolyse.

22. Système de conditionnement en récipient suivant la revendication 21, dans lequel le polymère d'alcool vinylique consiste en un polymère d'acétate de vinyle ayant subi 80 à 99 % d'alcoolyse ou d'hydrolyse.
